# EUROPÄISCHE PATENTSCHRIFT

(11) **EP 1 910 724 B1**
(45) Veröffentlichungstag und Bekanntmachung des Hinweises auf die Patenterteilung: **30.06.2010**
(21) Anmeldenummer: 06818224.5
(22) Anmeldetag: 11.07.2006
(51) Int. Cl.: F16K 31/06, F01L 1/46

(54) **ELEKTROMAGNETISCHE STELLEINHEIT**
ELECTROMAGNETIC ACTUATING UNIT
UNITE DE REGLAGE ELECTROMAGNETIQUE

(30) Priorität: 27.07.2005 DE 102005034939
(43) Veröffentlichungstag der Anmeldung: 16.04.2008
(73) Patentinhaber: Schaeffler Technologies GmbH & Co. KG, 91074 Herzogenaurach (DE)
(72) Erfinder: ROSS, Christoph, 96047 Bamberg (DE); GROESCHEL, Josef, 91327 Gössweinstein (DE)
(86) Internationale Anmeldenummer: PCT/EP2006/006750
(87) Internationale Veröffentlichungsnummer: WO 2007/028441

(56) Entgegenhaltungen:
- WO-A-2005/059420
- DE-A1- 10 229 912
- DE-A1- 19 956 160
- PATENT ABSTRACTS OF JAPAN Bd. 2000, Nr. 19, 5. Juni 2001 (2001-06-05) & JP 2001 050417 A (CKD CORP), 23. Februar 2001 (2001-02-23)

## Beschreibung

### Gebiet der Erfindung

Die Erfindung betrifft eine elektromagnetische Stelleinheit eines hydraulischen Wegeventils mit einem Gehäuse, mindestens einem Anker und mindestens einem Magnetjoch, wobei das Magnetjoch einen rohrförmigen Abschnitt aufweist, an den sich in axialer Richtung ein ringförmiger Abschnitt größeren Außendurchmessers anschließt, wobei innerhalb des Magnetjochs eine Stößelstange axial verschiebbar angeordnet ist, welche mittels des Ankers verschoben werden kann, wobei das Gehäuse topfförmig mit einem Boden ausgeführt ist in dem eine Öffnung vorgesehen ist, durch den sich der rohrförmige Abschnitt in das Gehäuse hinein erstreckt, wobei der Außendurchmesser des rohrförmigen Abschnittes dem Durchmesser der Öffnung zumindest annähernd angepasst ist und wobei der Boden sich mittelbar oder unmittelbar an dem ringförmigen Abschnitt abstützt.

Derartige Wegeventile werden in Brennkraftmaschinen beispielsweise zur Ansteuerung von hydraulischen Nockenwellenverstellern oder schaltbaren Nockenfolgern eingesetzt. Die Wegeventile bestehen aus einer elektromagnetischen Stelleinheit und einem Ventilabschnitt. Der Ventilabschnitt stellt den hydraulischen Abschnitt des Wegeventils dar, wobei an diesem zumindest ein Zulaufanschluss, mindestens ein Arbeitsanschluss und ein Tankanschluss ausgebildet sind. Mittels der elektromagnetischen Stelleinheit können gezielt bestimmte Anschlüsse des Ventilabschnitts hydraulisch miteinander verbunden und somit die Druckmittelströme gelenkt werden.

Für den Einsatz eines Wegeventils zur Steuerung eines Nockenwellenverstellers ist dieses im Normalfall als 4/3-Proportionalwegeventil ausgebildet. Ein derartiges Proportionalventil ist beispielsweise in der DE 199 56 160 offenbart. Die elektromagnetische Stelleinheit setzt sich in diesem Fall aus einem ersten Magnetjoch, einer Spule, einem zweiten Magnetjoch, einem Gehäuse, einem Anker und einem Anschlusselement, welches eine elektrische Steckverbindung aufnimmt, die zur Stromversorgung der Spule dient, zusammen.

Der Ventilabschnitt besteht aus einem Ventilgehäuse und einem darin axial verschiebbar angeordneten Steuerkolben. Das Ventilgehäuse ist innerhalb einer Aufnahmeöffnung des zweiten Magnetjochs angeordnet und ortsfest mit diesem verbunden. An der Außenmantelfläche des Ventilgehäuses sind vier Ringnuten ausgebildet, welche als Druckmittelanschlüsse dienen. In den Nutgründen der Ringnuten sind Öffnungen ausgebildet, wodurch Druckmittel in das Innere des Ventilgehäuses gelangen kann. Im Inneren des Ventilgehäuses ist ein Steuerkolben axial verschiebbar angeordnet, wobei der Außendurchmesser des Steuerkolbens dem Innendurchmesser des Ventilgehäuses angepasst ist. Des Weiteren sind am Steuerkolben ebenfalls Ringnuten ausgebildet, über welche benachbarte Druckmittelanschlüsse miteinander verbunden werden können.

Die Spule, das erste und das zweite Magnetjoch sind innerhalb des Gehäuses der elektromagnetischen Stelleinheit koaxial zueinander angeordnet. Das erste und das zweite Magnetjoch sind dabei in axialer Richtung,zueinander versetzt. In dem Bereich zwischen dem ersten und dem zweiten Magnetjoch befindet sich radial innerhalb der Magnetjoche der Anker, wobei dieser in radialer Richtung von der Spule umgeben ist. Der Anker, das Gehäuse, das erste und das zweite Magnetjoch bilden einen Flusspfad für die magnetischen Flusslinien, welche durch Bestromen der Spule hervorgerufen werden.

Durch Bestromen der Spule wird der Anker in Richtung des zweiten Magnetjochs gedrängt, wobei diese Bewegung mittels einer am Anker angebrachten Stößelstange auf den Steuerkolben übertragen wird. Dieser wird nun gegen eine sich am Ventilgehäuse abstützende Feder in axialer Richtung bewegt.

Wegeventile zur Ansteuerung von schaltbaren Nockenfolgern sind meist als Schaltventile ausgebildet. Ein derartiges Schaltventil ist, in einer Ausführung als 3/2-Schaltventil, beispielsweise aus der DE 102 52 431 A1 bekannt. Die elektromagnetische Stelleinheit besteht wiederum aus einem Gehäuse, einem Anker einem Anschlusselement, einem ersten und einem zweiten Magnetjoch. Die Funktion und die Ausbildung der elektromagnetischen Stelleinheit sind in weiten Teilen analog zu der des Proportionalventils.

An dem Ventilabschnitt sind in diesem Fall ein Zulaufanschluss, ein Arbeitsanschluss und ein Tankanschluss ausgebildet. Der Arbeitsanschluss kommuniziert über jeweils eine als Ventilsitz ausgebildete Öffnungen sowohl mit dem Zulauf- als auch mit dem Tankanschluss. Innerhalb des Ventilgehäuses ist weiterhin ein Steuerkolben angeordnet, an welchem zwei Schließelemente ausgebildet sind. Jedes Schließelement kann, abhängig von der Position des Steuerkolbens innerhalb des Ventilgehäuses, den Druckmittelfluss durch einen der Ventilsitze sperren oder freigeben. Abhängig von der axialen Position des Steuerkolbens kann so der Arbeitsanschluss selektiv mit dem Zulaufanschluss oder mit dem Tankanschluss verbunden werden. Die axiale Lage des Steuerkolbens wird dabei wiederum über die axiale Position des Ankers relativ zum zweiten Magnetjoch festgelegt.

Während der Montage der elektromagnetischen Stelleinheit entsteht aufgrund der Vielzahl der Bauteile, welches relativ zueinander positioniert und fixiert werden müssen, ein relativ hoher Montageaufwand, wodurch höhere Kosten anfallen.

### Zusammenfassung der Erfindung

Der Erfindung liegt daher die Aufgabe zugrunde diese geschilderten Nachteile zu vermeiden und somit eine elektromagnetische Stelleinheit eines Wegeventil zu schaffen, wobei dessen Montageaufwand minimiert und somit dessen Herstellungskosten verringert werden. Dabei soll besonderes Augenmerk auf eine einfache Positionierung der Bauteile zueinander und eine kostengünstige Fixierung der Bauteile gelegt werden.

Erfindungsgemäß wird die Aufgabe dadurch gelöst, dass der Boden und der rohrförmige Abschnitt mittels mindestens einer Verstemmung aneinander befestigt sind. Dabei kann vorgesehen sein das Wegeventil als Proportionalventil oder als Schaltventil auszubilden.

Durch die Ausbildung des die Stößelstange aufnehmenden Magnetjochs mit einem rohrförmigen Abschnitt, welcher durch eine in einem Boden des topfförmigen Gehäuses ausgebildete Öffnung greift, wird eine einfache radiale Positionierung der beiden Bauteile zueinander erreicht. Der an einem Ende des rohrförmigen Abschnitts vorgesehene ringförmige Abschnitt größeren Außendurchmessers des Magnetjochs legt auch die Position des Gehäuses relativ zu dem Magnetjoch in axialer Richtung fest. Somit sind diese beiden Bauteile, während der Herstellung der ortsfesten Verbindung zwischen diesen beiden, in axialer und radialer Richtung festgelegt. Die Fixierung der beiden Bauteile zueinander mittels Verstemmens stellt eine kostengünstige Methode dar.

In einer vorteilhaften Ausbildung der Erfindung ist vorgesehen, die Verstemmung mittels mindestens einer an dem rohrförmigen Abschnitt ausgebildeten Materialanhäufung auszuführen, die einen Rand der Öffnung in radialer Richtung zumindest teilweise überdeckt. Dabei kann vorgesehen sein, zur Ausbildung der Verstemmung Material von dem rohrförmigen Abschnitt des Magnetjochs in axialer Richtung auf den Boden zu zu verdrängen.
Während oder nach dem Fügevorgang der beiden Teile ist vorgesehen, dass ein rohrförmiger Stempel in den radialen Zwischenraum zwischen dem Magnetjoch und dem Gehäuse eingeführt wird, wobei der Innendurchmesser des Stempels zumindest partiell kleiner ausgeführt ist als der Außenumfang des rohrförmigen Abschnitts des Magnetjochs. Auf diese Weise wird Material vom Außenumfang des rohrförmigen Abschnitts abgeschält und formfüllend an die Verbindungsstelle zwischen dem Gehäuse und dem rohrförmigen Abschnitt verdrängt. Der Vorteil dieser Vorgehensweise liegt darin, dass der Verstemmvorgang mittels eines einfachen Verfahrens realisiert werden kann, eine exakte Zentrierung des Gehäuses auf dem Magnetjoch gewährleistet ist und das Fügen und das Befestigen in einem Arbeitsschritt erfolgen kann.

Des Weiteren kann vorgesehen sein, dass die Verstemmung am gesamten Umfang des rohrförmigen Abschnitts ausgebildet ist.
Die Verstemmung wird in diesem Fall mittels eines rohrförmigen Stempels mit kreiszylindrischer innerer Mantelfläche realisiert, deren Innendurchmesser kleiner als der Außendurchmesser des rohrförmigen Abschnittes des Magnetjochs ausgebildet ist. Auf diese Weise wird an der Verbindungsstelle zwischen dem Gehäuse und dem rohrförmigen Abschnitt eine in Umfangsrichtung umlaufende Materialwulst ausgebildet, wodurch eine hochstabile Verbindung erzeugt wird.

Alternativ kann vorgesehen sein die Verstemmung mit mindestens zwei in Umfangsrichtung beabstandeten, am Umfang des rohrförmigen Abschnittes verteilten Verstemmpunkten auszuführen. In diesem Fall ist das Verstemmwerkzeug rohrförmig mit kreiszylindrischer innerer Mantelfläche ausgebildet, deren Innendurchmesser dem Außendurchmesser des rohrförmigen Abschnittes des Magnetjochs entspricht oder größer ausgeführt ist. Weiterhin sind mehrere radial nach innen ragende, in Umfangsrichtung beabstandete Vorsprünge an der inneren Mantelfläche ausgebildet, wobei deren radialer Abstand kleiner als der Außendurchmesser des rohrförmigen Abschnitts des Magnetjochs ist. Statt einer in Umfangsrichtung umlaufenden Wulst werden in diesem Fall mehrere Verstemmpunkte ausgebildet. Durch ein derartiges Vorgehen kann die zum Herstellen der Verbindung benötigte Kraft reduziert werden.

### Kurze Beschreibung der Zeichnungen

Weitere Merkmale der Erfindung ergeben sich aus der nachfolgenden Beschreibung und aus den Zeichnungen, in denen Ausführungsbeispiele der Erfindung vereinfacht dargestellt sind. Es zeigen
- Figur 1: eine erste Ausführungsform einer erfindungsgemäßen elektro- magnetischen Stelleinheit am Beispiel eines 4/3-We- geproprtionalventils,
- Figur 1a: eine zweite Ausführungsform einer erfindungsgemäßen elektro- magnetischen Stelleinheit,
- Figur 2: die Einzelheit Z aus Figur 1,
- Figur 3: eine dritte Ausführungsform einer erfindungsgemäßen elektro- magnetischen Stelleinheit am Beispiel eines 3/2-Wege- schaltventils,
- Figur 4: eine Draufsicht auf die elektromagnetische Stelleinheit entlang des Pfeils V aus Figur 1a,
- Figur 5: eine Draufsicht analog Figur 4 mit einer unterschiedlich ausgebil- deten Verstemmung.

### Ausführliche Beschreibung der Zeichnung

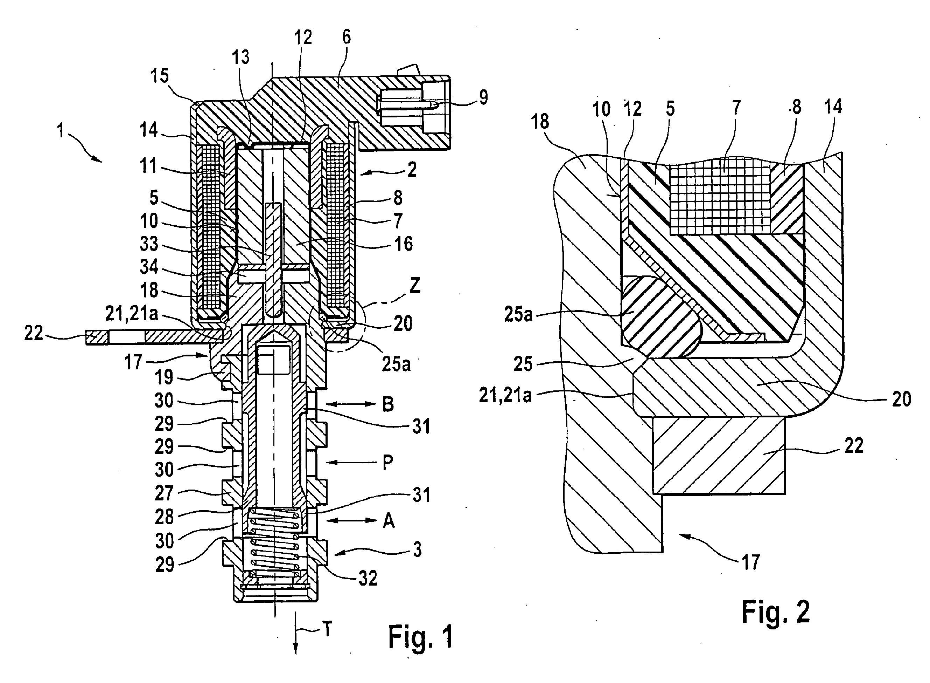

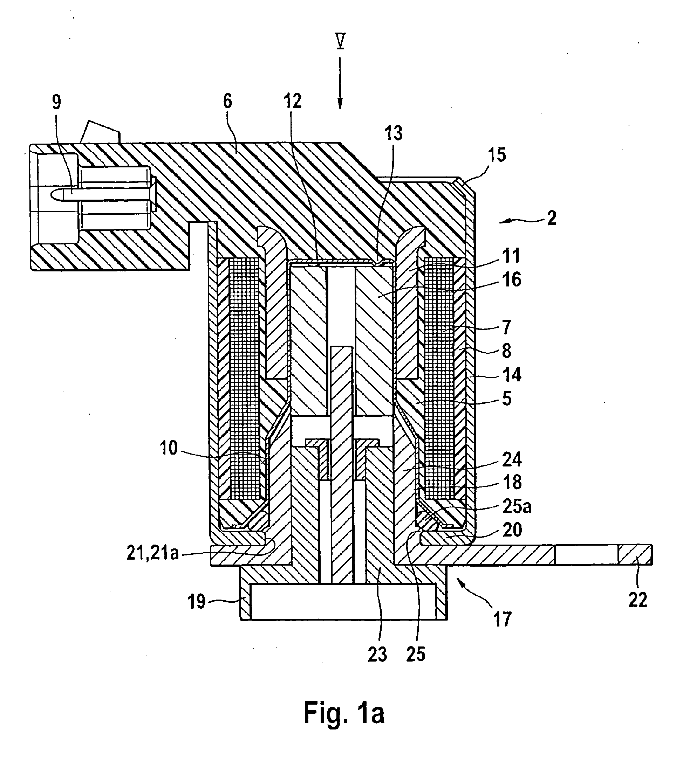

Figur 1 zeigt eine erste Ausführungsform einer erfindungsgemäßen elektromagnetischen Stelleinheit 2 am Beispiel eines als 4/3-Wegeproprtionalventils ausgeführten Wegeventils 1. Das Wegeventil 1 weist eine elektromagnetische Stelleinheit 2 und einen Ventilabschnitt 3 auf.

Die elektromagnetische Stelleinheit 2 weist einen Spulenkörper 5 und ein einteilig mit diesem ausgebildetes Anschlusselement 6 auf. Der Spulenkörper 5 trägt eine aus mehreren Windungen eines geeigneten Drahtes bestehende Spule 7. Die radial äußere Mantelfläche der Spule 7 wird von einer hülsenförmigen Materialschicht 8 umgeben, welche aus einem nicht magnetisierbaren Material besteht. Die Materialschicht 8 kann beispielsweise aus einem geeigneten Kunststoff bestehen und auf die gewickelte Spule 7 aufgespritzt werden. Innerhalb des Anschlusselements 6 ist eine elektrische Steckverbindung 9 aufgenommen, über welche die Spule 7 mit Strom beaufschlagt werden kann.

Der Spulenkörper 5 ist mit einer im Wesentlichen zylinderförmigen, sacklochartigen Ausnehmung 10 ausgebildet, welche konzentrisch zur Spule 7 angeordnet ist. Des Weiteren nimmt der Spulenkörper 5 und das Anschlusselement 6 am bodenseitigen Ende der Ausnehmung 10 ein hülsenförmig ausgeführtes erstes Magnetjoch 11 auf. Innerhalb der Ausnehmung 10 ist eine topfförmige Ankerführungshülse 12 angeordnet, wobei deren Außenkontur der Innenkontur der Ausnehmung 10 angepasst ist. Das bodenseitige Ende der Ankerführungshülse 12 ist mit sich axial nach innen erstreckenden Anschlägen 13 versehen. Des Weiteren erstreckt sich die Ankerführungshülse 12 in axialer Richtung entlang der gesamten Ausnehmung 10, wobei diese den Spulenkörper 5 an dessen Öffnung in radialer Richtung zumindest teilweise umgreift.

Der Spulenkörper 5 ist innerhalb eines topfförmig ausgebildeten Gehäuses 14 angeordnet. Das offene Ende des Gehäuses 14 überragt das Anschlusselement 6 in axialer Richtung, wobei dieses, und damit der Spulenkörper 5, mittels einer Bördelverbindung .15 innerhalb des Gehäuses 14 fixiert sind.

Innerhalb der Ankerführungshülse 12 ist ein Anker 16 in axialer Richtung verschiebbar angeordnet. Dabei ist der Außendurchmesser des Ankers 16 dem Innendurchmesser der Ankerführungshülse 12 angepasst. Der Verschiebeweg des Ankers 16 wird in der einen Richtung durch die Anschläge 13 und in der anderen Richtung durch ein zweites Magnetjoch 17 begrenzt.
Das zweite Magnetjoch 17 weist einen rohrförmigen Abschnitt 18 und einen sich in axialer Richtung daran anschließenden ringförmigen Abschnitt 19 auf. Der rohrförmige Abschnitt 18 erstreckt sich durch eine im Boden 20 des Gehäuses 14 ausgebildete Öffnung 21 in die in der Ausnehmung 10 des Spulenkörpers 5 angeordnete Ankerführungshülse 12. Dabei ist der Außendurchmesser des rohrförmigen Abschnitts 18 dem Durchmesser der Öffnung 21, bis auf ein eventuell vorhandenes Spiel, angepasst. Der Innendurchmesser des axialen Endes des rohrförmigen Abschnittes 18, welches dem Anker 16 zugewandt ist, ist größer ausgeführt als der Außendurchmesser des Ankers 16. Somit kann dieser in diesen Abschnitt eintauchen. Zusätzlich läuft die Außenmantelfläche des rohrförmigen Abschnitts 18 in Richtung Anker 16 konisch zu.

Das Gehäuse 14 stützt sich über einen Montageflansch 22 an dem ringförmigen Abschnitt 19 ab. Der Montageflansch 22 dient zur Befestigung des Wegeventils 1 an einer nicht dargestellten Umgebungskonstruktion.
Das zweite Magnetjoch 17 kann wie in Figur 1 dargestellt als einteiliges Bauteil ausgebildet sein. Eine alternative Ausführungsform ist in Figur 1a dargestellt. In dieser Ausführungsform besteht das zweite Magnetjoch 17 aus zwei Bauteilen, dem Polkern 23 und einem einteilig mit dem Montageflansch 22 ausgebildeten hülsenförmigen Fortsatz 24.

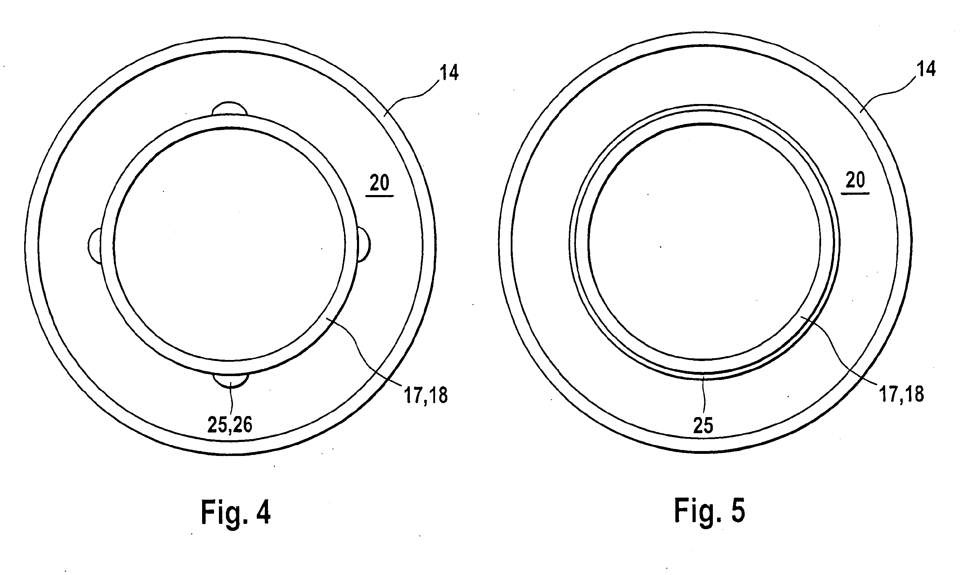

In Figur 2 ist die Verbindungsstelle zwischen dem Gehäuse 14 und dem zweiten Magnetjoch 17 dargestellt. Es handelt sich dabei um eine Verstemmung 25. Diese kann beispielsweise dadurch realisiert werden, dass nach dem Positionieren des Gehäuses 14 auf dem zweiten Magnetjoch 17 Material von der Außenumfangsfläche des zweiten Magnetjochs 17 in axialer Richtung auf das Gehäuse 14 zu verdrängt wird und formfüllend in die Verbindungsstelle zwischen diesen beiden Bauteilen verbracht wird. Dabei werden Materialanhäufungen an dem rohrförmigen Abschnitt 18 im Bereich der Verbindungsstelle ausgebildet, welche sich in radialer Richtung nach außen über einen Rand 21 a der Öffnung 21 hinaus erstrecken. Somit ist eine funktionssichere und kostengünstige Verbindung zwischen dem Gehäuse 14 und dam zweiten Magnetjoch 17 realisiert. Des Weiteren wird das Gehäuse 14 durch diese Verbindungsmethode zum zweiten Magnetjoch 17 zentriert, in dem Fall, dass der Außendurchmesser des rohrförmigen Abschnitts 18 und der Durchmesser der Öffnung 21 mit einem geringen Spiel ausgeführt sind. In diesem Fall wird das Material während des Verstemmvorgangs in den Zwischenraum zwischen diesen Bauteilen gedrängt und so das Spiel eliminiert.
Zwischen dem rohrförmigen Abschnitt 18 des zweiten Magnetjochs 17, dem Boden 20 des Gehäuses 14 und der Ankerführungshülse 12 ist ein Dichtring 25a angeordnet. Dieser verhindert im Zusammenwirken mit der Ankerführungshülse 12, dass in die elektromagnetische Stelleinheit 2 eindringendes Druckmittel, in der Regel Motoröl, zum Spulenkörper 5 gelangt, wodurch dieser vor Schädigungen durch das Druckmittel geschützt wird.
Die Herstellung der Verstemmung 25 erfolgt mittels eines rohrförmigen Stempels, der entlang der Außenmantelfläche des zweiten Magnetjochs 17 in axialer Richtung auf das Gehäuse 14 zu verfahren wird. Dabei ist der Innendurchmesser des Stempels kleiner als der Außendurchmesser des zweiten Magnetjochs 17 ausgeführt. In diesem Fall ist die Verstemmung 25 als ringförmig um das zweite Magnetjoch 17 umlaufende Materialwulst ausgebildet. Dies ist in Figur 5 schematisch dargestellt. Figur 5 zeigt eine Draufsicht auf die elektromagnetische Stelleinheit 2 aus Figur 1a entlang des Pfeils V, wobei nur das Gehäuse 14 und das zweite Magnetjoch 17 dargestellt sind.

Eine alternative Verbindungsmethode besteht darin, den Innendurchmesser des Stempels dem Außendurchmessers des zweiten Magnetjochs 17 anzupassen oder geringfügig größer auszubilden, wobei an dem Stempel sich in radialer Richtung nach innen erstreckende Ausbuchtungen vorgesehen sind. Dies führt im Gegensatz zu der in Figur 5 dargestellten Ausführungsform nicht zu einer in Umfangsrichtung um das zweite Magnetjoch 17 umlaufenden Wulst, sondern zu diskreten, in Umfangsrichtung beabstandeten Verstemmpunkten 26 (Figur 4).

Wie in Figur 1 zu erkennen ist, besteht der Ventilabschnitt 3 des als 4/3-Wegeproportionalventil ausgeführten Wegeventils 1 aus einem Ventilgehäuse 27 und einem Steuerkolben 28. Das Ventilgehäuse 27 kann entweder einteilig mit dem zweiten Magnetjoch 17 (rechte Seite der Zeichnung) oder als separates Bauteil (linke Seite der Zeichnung) ausgebildet sein. Im Falle einer separaten Ausbildung des Ventilgehäuses 27, ist dieses beispielsweise mittels einer Schraub-, Schweiß-, Bördelverbindung oder gleichwirkender Verbindungsmethoden mit dem zweiten Magnetjoch 17 verbunden. An der Außenmantelfläche des Ventilgehäuses 27 sind mehrere Ringnuten 29 ausgebildet, welche über in den Nutgründen der Ringnuten 29 ausgebildete Aussparungen 30 mit dem Inneren des im Wesentlichen hohlzylindrisch ausgeführten Ventilgehäuses 27 kommunizieren. Die Ringnuten 29 und die der elektromagnetischen Stelleinheit 2 abgewandten Öffnung im Ventilgehäuse 27 dienen als Druckmittelanschlüsse A, B, P, T. Die mittlere Ringnut 29, welche als Zulaufanschluss P dient, kommuniziert über eine nicht dargestellte Druckmittelleitung mit einer ebenfalls nicht dargestellten Druckmittelpumpe. Die beiden äußeren Ringnuten 29, welche als Arbeitsanschlüsse A, B dienen, kommunizieren über ebenfalls nicht dargestellte Druckmittelleitungen mit jeweils einer oder einer Gruppe von gegeneinander wirkenden Druckkammern eines ebenfalls nicht dargestellten Nockenwellenverstellers. Der axiale Anschluss (Tankanschluss) T kommuniziert mit einem ebenfalls nicht dargestellten Druckmittelreservoir.

Innerhalb des Ventilgehäuses 27 ist ein Steuerkolben 28 axial verschiebbar angeordnet. An der Außenmantelfläche des Steuerkolbens 28 sind als Ringstege ausgebildete Steuerabschnitte 31 ausgebildet. Der Außendurchmesser der Steuerabschnitte 31 ist dem Innendurchmesser des Ventilgehäuses 27 angepasst. Durch eine geeignete axiale Positionierung des Steuerkolbens 28 relativ zum Ventilgehäuse 27 können benachbarte Druckmittelanschlüsse A, B, P miteinander verbunden werden. Der jeweils nicht mit dem Zulaufanschluss P verbundene Arbeitsanschluss A, B ist gleichzeitig mit dem Tankanschluss T verbunden. Auf diese Weise kann gezielt den einzelnen Druckkammern des Nockenwellenverstellers Druckmittel zugeführt oder aus diesen abgeleitet werden.

Der Steuerkolben 28 wird einenends mit der Kraft eines Federelements 32 in Richtung der elektromagnetischen Stelleinheit 2 beaufschlagt. Am anderen axialen Ende des Steuerkolbens 28 liegt eine Stößelstange 33 an, welche sich durch eine Bohrung des zweiten Magnetjochs 17 erstreckt und ortsfest mit dem Anker 16 verbunden ist.

In unbestromtem Zustand der Spule 7 wird der Steuerkolben 28 aufgrund der Kraft des Federelements 32 in Richtung der elektromagnetischen Stelleinheit 2 gedrängt.

Das Gehäuse 14, das erste Magnetjoch 11, der Anker 16 und das zweite Magnetjoch 17 bestehen aus einem magnetisierbaren Material, während das Anschlusselement 6, die Stößelstange 33, der Spulenkörper 5 und die Ankerführungshülse 12 aus einem nicht magnetisierbaren Material bestehen. Somit etabliert sich durch Bestromen der Spule 7 innerhalb der elektromagnetischen Stelleinheit 2 über den Anker 16, das erste Magnetjoch 11, das Gehäuse 14, das zweite Magnetjoch 17 und einen zwischen dem Anker 16 und dem zweiten Magnetjoch 17 befindlichen Luftspalt 34 ein magnetischer Fluss, welcher den Anker 16 in Richtung des Ventilabschnitts 3 drängt. Dadurch wird der Steuerkolben 28 mittels der Stößelstange 33 gegen die Kraft des Federelements 32 in axialer Richtung verschoben. Durch eine geeignete Regelung des in der Spule 7 fließenden Stroms kann der Steuerkolben 28 relativ zum Ventilgehäuse 27 in jeder beliebigen Position zwischen zwei Endanschlägen verstellt werden und somit die Druckmittelzuflüsse zu oder von den Druckkammern des Nockenwellenverstellers geregelt werden.

Im Folgenden wird der Zusammenbau der elektromagnetischen Stelleinheit 2 erläutert. Zunächst wird das Gehäuse 14 auf dem ersten Magnetjoch 17 positioniert. Dadurch, dass der Außendurchmesser des rohrförmigen Abschnitts 18 dem Durchmesser der Öffnung 21 angepasst ist, werden diese Bauteile zueinander zentriert. Die axiale Lage wird durch den Boden 20 und den ringförmigen Abschnitt 19 festgelegt. Anschließend oder im gleichen Arbeitsschritt wird die Verstemmung 25 zwischen dem Boden 20 und dem zweiten Magnetjoch 17 ausgebildet. Sollte zwischen der Außenmantelfläche des rohrförmigen Abschnittes 18 und dem Rand 21 a der Öffnung 21 ein Spiel vorliegen, so wird in diesem Arbeitsschritt das Gehäuse 14 zum zweiten Magnetjoch 17 durch Materialeintrag zentriert. Anschließend wird der Dichtring 25a eingelegt, der Anker 16 auf das zweite Magnetjoch 17 aufgesetzt und der Spulenkörper 5 mit dem Anschlusselement 6 und der Ankerführungshülse 12 zwischen dem Gehäuse 14 und dem rohrförmigen Abschnitt 18 positioniert. Der Anker 16 wird durch die mit ihm fest verbundene Stößelstange 33 und dessen Außenmantelfläche, welche mit einer Innenmantelfläche des rohrförmigen Abschnittes 18 zusammenwirkt, zentriert. Die Zentrierung des Spulenkörpers 5 erfolgt mittels des Gehäuses 14 und des rohrförmigen Abschnittes 18. Zu diesem Zweck sind die Außendurchmesser des Spulenkörpers 5 und der Materialschicht 8 dem Innendurchmesser des Gehäuses 14 angepasst. Weiterhin ist der Innendurchmesser des Spulenkörpers 5 dem Außendurchmesser des rohrförmigen Abschnitts 18 angepasst.
Anschließend wird die Bördelverbindung 15 zwischen dem Gehäuse 14 und dem Anschlusselement 6 hergestellt und, bei separater Ausführung des Ventilgehäuses 27, der Ventilabschnitt 3 montiert.

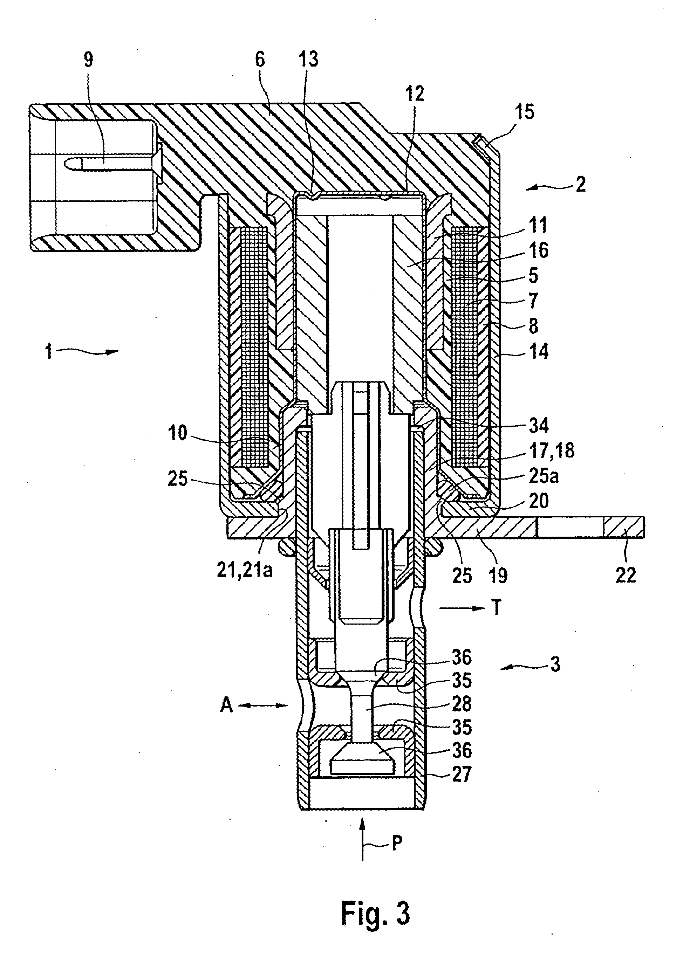

Figur 3 zeigt eine weitere Ausführungsform einer erfindungsgemäßen elektromagnetischen Stelleinheit 2 am Beispiel eines als 3/2-Wegeschaltventil ausgebildeten Wegeventils 1. Derartige Ventile werden zum Beispiel zur Ansteuerung eines Verriegelungsmechanismuses von schaltbaren Nockenfolgern verwendet. Dieses Wegeventil 1 besteht wiederum aus einer elektromagnetischen Stelleinheit 2 und einem Ventilabschnitt 3. Die elektromagnetische Stelleinheit 2 ist in weiten Teilen identisch zu der in den Figuren 1 bzw. 1a dargestellten Stelleinheit 2. Im Gegensatz zu diesen Ausführungsformen ist an dem axialen Ende des zweiten Magnetjochs 17, welches dem Anker 16 zugewandt ist, kein konischer Abschnitt ausgebildet. Dieser dient in den ersten beiden Ausführungsformen dazu, eine elektromagnetische Stelleinheit 2 mit einer linearen Kennlinie darzustellen. In der in Figur 3 dargestellten Ausführungsform ist ein derartiger linearer Zusammenhang nicht nötig, da dieses Wegeventil 1 nur zwei Steuerzustände benutzt, nämlich einen unbestromten Zustand und einen maximal bestromten Zustand.
Der Ventilabschnitt 3 besteht wiederum aus einem Ventilgehäuse 27 und einem axial darin verschiebbaren Steuerkolben 28. Im Gegensatz zu der in der Figur 1 dargestellten Ausführungsform sind an dem Ventilgehäuse 27 in dieser Ausführungsform nur drei Druckmittelanschlüsse A, B, T ausgebildet. Innerhalb des Ventilgehäuses 27 sind zwei Ventilsitze 35 angeordnet, wobei jeder Ventilsitz 35 mit einem am Steuerkolben 28 ausgebildeten Schließkörper 36 zusammenwirken kann.

In Figur 3 ist das Wegeventil 1 im bestromten Zustand dargestellt. Aufgrund des durch die Spule 7 generierten magnetischen Flusses sind der Anker 16 und damit der Steuerkolben 28 in der Darstellung axial nach unten verschoben. Als Konsequenz verschließt der obere Schließkörper 36 den oberen Ventilsitz 35, wodurch die Verbindung zwischen den Arbeitsanschluss A und dem Tankanschluss T gesperrt ist, während Druckmittel vom Zulaufanschluss P über den geöffneten unteren Ventilsitz 35 zum Arbeitsanschluss A gelangen kann. Im unbestromten Zustand der Spule 7 entfällt die magnetische Kraft auf den Anker 16, wodurch der Steuerkolben 28 durch die Strömungskräfte des Druckmittels am Zulaufanschluss P in axialer Richtung nach oben verschoben wird. Dadurch kommt der untere Schließkörper 36 am unteren Ventilsitz 35 zum Anliegen, wodurch die Verbindung zwischen dem Zulaufanschluss P und dem Arbeitsanschluss A unterbrochen und gleichzeitig die Verbindung zwischen dem Arbeitsanschluss A und dem Ablaufanschluss T, über den oberen Ventilsitz 35, hergestellt wird.

In dieser Ausführungsform ist die Verbindung zwischen dem Gehäuse 14 und dem zweiten Magnetjoch 17 in der gleichen Art und Weise hergestellt wie in den Ausführungsformen, die in den Figuren 1 bzw. 1a dargestellt sind.

Die erfindungsgemäße Ausführung einer elektromagnetischen Stelleinheit 2 kann natürlich auch in Wegeventilen 1 Anwendung finden, in denen der Ventilabschnitt 3 nicht fest mit der Stelleinheit 2 verbunden ist, sondern ohne feste Verbindung in axialer Richtung zueinander angeordnet sind Derartige Wegeventile 1 finden beispielsweise als Zentralventil für Nockenwellenversteller Einsatz, in denen der Ventilabschnitt 3 innerhalb einer Nockenwelle angeordnet ist und sich mit dieser dreht, während die Stelleinheit 2 in axialer Richtung dazu, fest an einem Zylinderkopf oder einem Zylindekopfdeckel angeordnet ist.

### Bezugszeichen

- 1: Wegeventil
- 2: Stelleinheit
- 3: Ventilabschnitt
- 5: Spulenkörper
- 6: Anschlusselement
- 7: Spule
- 8: Materialschicht
- 9: Steckverbindung
- 10: Ausnehmung
- 11: erstes Magnetjoch
- 12: Ankerführungshülse
- 13: Anschlag
- 14: Gehäuse
- 15: Bördelverbindung
- 16: Anker
- 17: zweites Magnetjoch
- 18: rohrförmiger Abschnitt
- 19: Ringförmiger Abschnitt
- 20: Boden
- 21: Öffnung
- 21 a: Rand
- 22: Montageflansch
- 23: Polkern
- 24: Fortsatz
- 25: Verstemmung
- 25a: Dichtring
- 26: Verstemmpunkt
- 27: Ventilgehäuse
- 28: Steuerkolben
- 29: Ringnut
- 30: Aussparungen
- 31: Steuerabschnitt
- 32: Federelement
- 33: Stößelstange
- 34: Luftspalt
- 35: Ventilsitz
- 36: Schließkörper

- P: Zulaufanschluss
- T: Tankanschluss
- A: erster Arbeitsanschluss
- B: zweiter Arbeitsanschluss

## Patentansprüche

1. Elektromagnetische Stelleinheit (2) eines hydraulischen Wegeventils (1) mit
- einem Gehäuse (14), mindestens einem Anker (16) und mindestens einem Magnetjoch (17),
- wobei das Magnetjoch (17) einen rohrförmigen Abschnitt (18) aufweist, an den sich in axialer Richtung ein ringförmiger Abschnitt (19) größeren Außendurchmessers anschließt,
- wobei innerhalb des Magnetjochs (17) eine Stößelstange (33) axial verschiebbar angeordnet ist, welche mittels des Ankers (16) verschoben werden kann,
- wobei das Gehäuse (14) topfförmig mit einem Boden (20) ausgeführt ist in dem eine Öffnung (21) vorgesehen ist, durch den sich der rohrförmige Abschnitt (18) in das Gehäuse (14) hinein erstreckt,
- wobei der Außendurchmesser des rohrförmigen Abschnittes (18) dem Durchmesser der Öffnung (21) zumindest annähernd angepasst ist
- und wobei der Boden (20) sich mittelbar oder unmittelbar an dem ringförmigen Abschnitt (18) abstützt, **dadurch gekennzeichnet, dass** der Boden (20) und der rohrförmige Abschnitt (18) mittels mindestens einer Verstemmung (25) aneinander befestigt sind.

2. Elektromagnetische Stelleinheit (2) nach Anspruch 1, **dadurch gekennzeichnet, dass** das Wegeventil (1) als Proportionalventil ausgebildet ist.

3. Elektromagnetische Stelleinheit (2) nach Anspruch 1, **dadurch gekennzeichnet, dass** das Wegeventil (1) als Schaltventil ausgebildet ist.

4. Elektromagnetische Stelleinheit (2) nach Anspruch 1, **dadurch gekennzeichnet, dass** die Verstemmung (25) mittels mindestens einer an dem rohrförmigen Abschnitt (18) ausgebildeten Materialanhäufung ausgeführt ist, die einen Rand (21 a) der Öffnung in radialer Richtung zumindest teilweise überdeckt.

5. Elektromagnetische Stelleinheit (2) nach Anspruch 1, **dadurch gekennzeichnet, dass** zur Ausbildung der Verstemmung (25) Material von dem rohrförmigen Abschnitt (18) des Magnetjochs (17) in axialer Richtung auf den Boden (20) zu verdrängt wird.

6. Elektromagnetische Stelleinheit (2) nach Anspruch 1, **dadurch gekennzeichnet, dass** die Verstemmung (25) am gesamten Umfang des rohrförmigen Abschnitts (18) ausgebildet ist.

7. Elektromagnetische Stelleinheit (2) nach Anspruch 1, **dadurch gekennzeichnet, dass** die Verstemmung (25) mit mindestens zwei in Umfangsrichtung beabstandeten, am Umfang des rohrförmigen Abschnitts (18) verteilten Verstemmpunkten (26) ausgeführt ist.

## Claims

1. Electromagnetic actuating unit (2) of a hydraulic directional valve (1) comprising
- a housing (14), at least one armature (16) and at least one magnet yoke (17),
- the magnet yoke (17) having a tubular portion (18) which is adjoined in the axial direction by an annular portion (19) with a larger outside diameter,
- a push rod (33) which can be displaced by means of the armature (16) being arranged in an axially displaceable manner within the magnet yoke (17),
- the housing (14) being formed in a pot-like manner with a base (20) in which an opening (21) is provided through which the tubular portion (18) extends into the housing (14),
- the outside diameter of the tubular portion (18) being at least approximately matched to the diameter of the opening (21),
- and the base (20) being indirectly or directly supported on the annular portion (18), **characterized in that** the base (20) and the tubular portion (18) are fastened to one another by means of at least one caulked connection (25).

2. Electromagnetic actuating unit (2) as claimed in Claim 1, **characterized in that** the directional valve (1) is in the form of a proportional valve.

3. Electromagnetic actuating unit (2) as claimed in Claim 1, **characterized in that** the directional valve (1) is in the form of a changeover valve.

4. Electromagnetic actuating unit (2) as claimed in Claim 1, **characterized in that** the caulked connection (25) is formed by means of at least one material accumulation which is formed on the tubular portion (18) and at least partially covers an edge (21a) of the opening in the radial direction.

5. Electromagnetic actuating unit (2) as claimed in Claim 1, **characterized in that** material is displaced from the tubular portion (18) of the magnet yoke (17) in the axial direction toward the base (20) in order to form the caulked connection (25).

6. Electromagnetic actuating unit (2) as claimed in Claim 1, **characterized in that** the caulked connection (25) is formed over the entire circumference of the tubular portion (18).

7. Electromagnetic actuating unit (2) as claimed in Claim 1, **characterized in that** the caulked connection (25) is formed with at least two caulking points (26) which are spaced apart in the circumferential direction and are distributed over the circumference of the tubular portion (18).

## Revendications

1. Unité de positionnement électromagnétique (2) d'une vanne de distribution hydraulique (1) comprenant un boîtier (14), au moins un induit (16) et au moins une culasse magnétique (17), la culasse magnétique (17) présentant une portion tubulaire (18) à laquelle vient se rattacher, dans le sens axial, une portion annulaire (19) au diamètre extérieur plus grand, une tige de poussoir (33) étant disposée à l'intérieur de la culasse magnétique (17) de manière à pouvoir coulisser dans le sens axial, laquelle peut être déplacée au moyen de l'induit (16), le boîtier (14) étant réalisé en forme de pot avec un fond (20) dans lequel est prévue une ouverture (21) à travers laquelle la portion tubulaire (18) s'étend à l'intérieur du boîtier (14), le diamètre extérieur de la portion tubulaire (18) étant au moins approximativement adapté au diamètre de l'ouverture (21) et le fond (20) s'appuyant directement ou indirectement sur la portion annulaire (18), **caractérisée en ce que** le fond (20) et la portion tubulaire (18) sont fixés l'un à l'autre au moyen d'au moins un matage (25).

2. Unité de positionnement électromagnétique (2) selon la revendication 1, **caractérisée en ce que** la vanne de distribution (1) est réalisée sous la forme d'une vanne proportionnelle.

3. Unité de positionnement électromagnétique (2) selon la revendication 1, **caractérisée en ce que** la vanne de distribution (1) est réalisée sous la forme d'une vanne tout ou rien.

4. Unité de positionnement électromagnétique (2) selon la revendication 1, **caractérisée en ce que** le matage (25) est réalisé au moyen d'au moins une accumulation de matière formée sur la portion tubulaire (18), laquelle recouvre au moins partiellement un bord (21a) de l'ouverture dans le sens radial.

5. Unité de positionnement électromagnétique (2) selon la revendication 1, **caractérisée en ce que** pour former le matage (25), de la matière de la portion tubulaire (18) de la culasse magnétique (17) est chassée dans le sens axial en direction du fond (20).

6. Unité de positionnement électromagnétique (2) selon la revendication 1, **caractérisée en ce que** le matage (25) est réalisé sur tout le pourtour de la portion tubulaire (18).

7. Unité de positionnement électromagnétique (2) selon la revendication 1, **caractérisée en ce que** le matage (25) est réalisé avec au moins deux points de matage (26) espacés dans le sens du pourtour et répartis sur le pourtour de la portion tubulaire (18).
